# EUROPEAN PATENT SPECIFICATION

(11) **EP 3 481 032 B1**
(45) Date of publication and mention of the grant of the patent: **02.11.2022**
(21) Application number: 17306537.6
(22) Date of filing: 06.11.2017
(51) Int. Cl.: H04L 69/40, H04L 67/00

(54) **REGRESSION SAFE NETWORK COMMUNICATION LOGIC FOR AN IOT DEVICE AND METHOD OF MANAGING THE SAME**
REGRESSIONSSICHERE NETZWERKKOMMUNIKATIONSLOGIK FÜR EINE IOT-VORRICHTUNG UND VERFAHREN ZUR VERWALTUNG DAVON
LOGIQUE DE COMMUNICATION SUR RÉSEAU SÉCURISÉ DE RÉGRESSION POUR UN DISPOSITIF IOT ET PROCÉDÉ DE GESTION CORRESPONDANT

(43) Date of publication of application: 08.05.2019
(73) Proprietor: Netatmo, 92100 Boulogne Billancourt (FR)
(72) Inventor: PREVERAUD, Emmanuel, 92100 Boulogne-Billancourt (FR)
(74) Representative: Atout PI Laplace

(56) References cited:
- EP-A1- 2 749 848
- US-B1- 6 314 532

## Description

### FIELD OF THE INVENTION

The invention relates to a network connection logic for an loT device to be connected to a communication network. More specifically, the loT devices of the invention have a network connectivity that can be restored automatically, i.e. without a need for user additional input or action.

### BACKGROUND

The deployment of the Internet of Things (loT) is based on the assumption that devices remain connected to a network in all circumstances to be capable of receiving and/or transmitting data. For instance a security camera installed on public or private premises must normally be operative 24 hours a day/7 days a week. The specification is also valid for electronic locks. Likewise for devices that control a heating or cooling equipment, a lighting system or any kind of sensors that capture climate or environment parameters that are then used to trigger some kind of action. Most loT devices are loaded with a firmware that controls the processor of the device, its sensors, access to its storage capacity, etc...

Whatever the care with which development work is carried out, it is common practice to provide updates, generally limited to a few patches, of the firmware from time to time, either to correct a known bug or to add functionalities. Even when the maintenance of the firmware is carried out using state-of-the-art methods, including carrying out various types of testing before deployment on the field, it may happen that some functionalities of the device are no longer operative after installation of the update. This phenomenon is called "regression". An easy fix to a regression consists in coming back to the previous version of the firmware that was operative before the update.

But such an easy fix cannot be implemented when the regression has affected the part of the firmware that manages the network connectivity of the device, since patches can no longer reach the device from the maintenance platform of its manufacturer...

Under such circumstances, the only available fix may be to trigger a factory reset if the device offers such a functionality. But in any case, this will require an action from a user and the version of the firmware that will replace the bugged one will not be the most recent but the initial version. Thus, the user defined parameters (such as Wi-Fi password) that worked with the most recent version may not work with the initial version and the connection may not work at all...

There is therefore a need for a network connection driver for an loT device that is capable of automatically restoring a more recent version in case of an update to a last version that is not operative. Document EP 2 749 848 A1 (GEN ELECTRIC [US]) 2 July 2014 (2014-07-02) relates to methods and systems for the automatic detection of firmware update errors during deployment of firmware on an advanced metering infrastructure.

### SUMMARY OF THE INVENTION

A purpose of the present invention is to meet this need. To this effect, the invention discloses notably a network communication logic that is operative to determine that the connectivity functions of a firmware of an loT device has been impaired by an upgrade and trigger a replacement of part of the firmware that manages the connectivity by the last functional version.

More precisely, the invention discloses a network communication logic according to claim 1.

Advantageously, automatically trigger an access to the previous version of the connection driver comprises automatically trigger a replacement of the current version of the connection driver by the previous version of the connection driver and restart the connection of the device.

Advantageously, automatically trigger a replacement of the current version of the connection driver by the previous version of the connection driver comprises erasing the current version of the connection driver.

Advantageously, automatically provide a determination that the current version of the connection driver is not operative to connect a device to the network comprises changing a flag of choice of the connection driver from the current version to the previous version, and automatically trigger an access to the previous version of the connection driver comprises, on the flag being in a previous version state, trigger a call on the previous version of the connection driver.

Advantageously, the network communication logic of the invention further comprises an access to a current version of configuration parameters and an input of these configuration parameters to the connection driver.

Advantageously, the connection is a wireless connection compliant with one of 2 to 5G cellular, a Wi-Fi, a Zigbee or a Bluetooth standard or a SigFox or LoRa connection.

Advantageously, the connection is a wired connection.

Advantageously, automatically provide a determination that the current version of the connection driver is not operative to connect to the network comprises a determination that a period during which trials to connect the device to the network have failed exceeds a predefined threshold.

Advantageously, automatically provide a determination that the current version of the connection driver is not operative to connect to the network comprises a determination that a number of trials to connect the device to the network that have failed exceeds a predefined threshold.

Advantageously, automatically provide a determination that the current version of the connection driver is not operative to connect to the network further comprises a determination that the current version of the connection driver has been installed within a predefined threshold.

Advantageously, automatically provide a determination that the current version of the connection driver is not operative to connect to the network further comprises a determination that a number of failures to configure the device with the configuration parameters exceeds a predefined threshold.

Advantageously, the predefined thresholds of time limits and/or number of trials are adjusted during operation by a patch provided by an operator of the network.

Advantageously, the predefined thresholds of time limits and/or number of trials are adjusted based on connection/configuration failure reports.

Advantageously, automatically trigger an access to the previous version of the connection driver instead of the current version of the connection driver is disabled when one or more of a predefined number of connectivity tests or configuration tests are valid.

Advantageously, a frequency of connection tests is adjusted over time.

The invention also discloses an electronic device comprising in a firmware the network communication logic according to some embodiments of the invention, the device selected in a group comprising weather stations, cameras, automatic shutters/blinders, thermostatic radiator valves, smart plugs, smart lights, smart locks.

The invention also discloses a method according to claim 15.

Among other advantages, the invention enables seamless continuity of operation without a need of an intervention of a user.

The invention requires minimal memory space in the device since only a previous version of the network communication logic needs to be stored.

The invention can work with any kind of connection, wireless or wired.

The invention allows a definition of parameters that may be tuned by the operator of the device or the user to a specific application and setting to adjust the conditions under which a determination is made that the network connectivity has been affected by the update.

The invention also enables a definition of a predefined time limit after update when the test of the connectivity is performed.

The invention can work in any kind of connected device, such as weather stations, cameras, automatic shutters/blinders, thermostatic radiator valves, smart plugs, smart lights, smart locks, smart appliances, smart TVs.

### BRIEF DESCRIPTION OF THE DRAWINGS

The invention and its advantages will be better understood upon reading the following detailed description of a particular embodiment, given purely by way of a non-limiting example, this description being made with reference to the accompanying drawings in which:
- Figure 1 represents a number of devices with applications in a smart home environment that may be enabled by the invention, in a number of its embodiments;
- Figure 2 represents an architecture of a system configured to manage an loT network according to some embodiments of the invention;
- Figure 3 represents a functional architecture of a network communication logic according to some embodiments of the invention;
- Figures 4a, 4b and 4c are variants of a flow chart of a method to implement the invention according to some of its embodiments.

### DETAILED DESCRIPTION

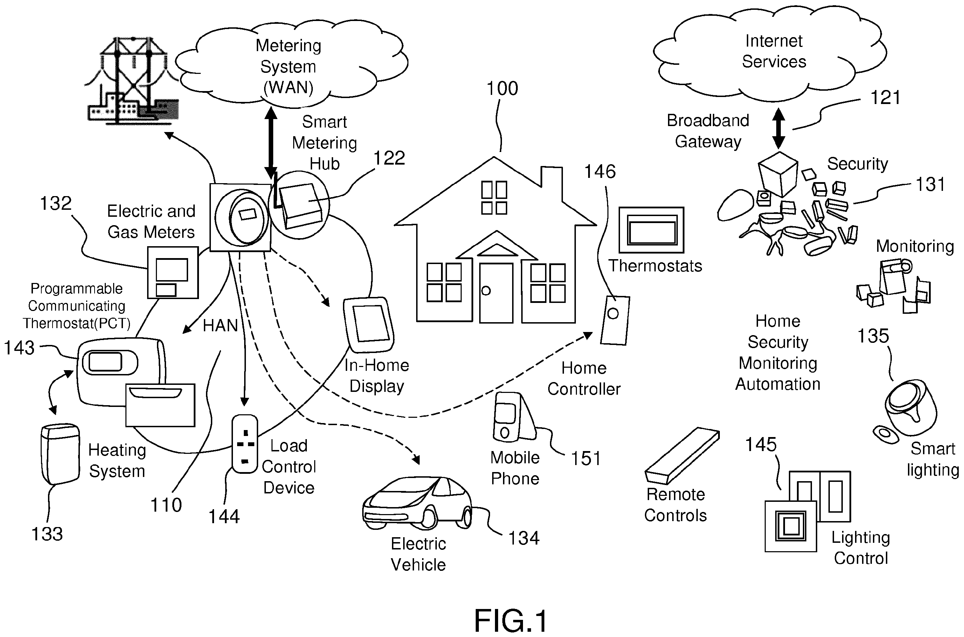

Figure 1 represents a number of devices with applications in a smart home environment that may be enabled by the invention, in a number of its embodiments.

The description of the different systems illustrated on figure 1 will allow a better understanding of the use cases of the instant invention. Nevertheless, these use cases should not be construed as limitative but only illustrative of the field of application of the invention. In particular, the invention may be embodied in other devices that are installed in other environments, like a collective housing, an industrial or tertiary building, public premises or any kind of setting.

The smart building 100 represented on the figure has one or more Local Area Networks or Home Area Networks (LAN or HAN, 110). LANs may use various types of transmission layers: Ethernet cable, optical fiber, Power Line Carrier (PLC), wireless transmission. Different protocols may be used. In the case of a wireless transmission media, Wi-Fi or Zigbee are among the most popular. It is likely that 5G will also be used for HAN when it will become available.

In a building, there may be a single LAN or a plurality of LANs. The option may depend on the obligation to use more than one gateway to communicate to the outside world. For instance, there may be a first gateway 121 to access Internet services and there may be a second gateway 122 to access metering systems 132. This segregation may be imposed by the utility companies (electricity, gas, water, etc...) managing the smart metering systems because they use proprietary communication means that need to be separate from the other HANs. But in other use cases where the metering is performed through internet applications, it is possible to have the smart meters share in the same single HAN.

But there may be other reasons to opt for segregated HANs: it may be more efficient to allocate dedicated networks to specific applications. Some exemplary applications are illustrated on figure 1, but of course other applications may be envisaged.

A security monitoring application 131 may be deployed in and/or around the building 100. It may consist of a number of sensors such as: visible light or IR cameras; radars or LIDARS; sound detectors, presence sensors, proximity sensors, etc... Some sensors may be located inside the building. Other sensors may be located outside the building. The sensors may capture data systematically or selectively. Selectivity may be made contingent on predefined types of objects or events being detected. Sensor data may be monitored locally or remotely. Monitoring may trigger alarms, also locally or remotely. Alarms may be acoustic signals, optical signals, or in the form of a message to a remote response center that will send security staff on-site.

The Heating system 133 of the building 100 may be a programmable heating system controllable locally by a Programmable Communicating Thermostat (PCT, 143). The PCT may have one or more temperature setpoints. The temperature setpoints may be entered manually in the PCT. A plurality of temperature setpoints may be programmed locally on the PCT based on a daily timeline (early night/mid night/late night/early morning/midday/late day temperature setpoints, by way of non limitative examples). The PCT being connected to a HAN, it may also be programmed remotely, for instance using an application installed on and/or accessible from a mobile phone 151. In some embodiments of a Heating system, Thermostatic Radiating Valves may be installed on some or all of the radiators of the Heating system and their temperature setpoints may also be controlled either locally or remotely. Also, a refrigerating equipment may be controlled locally or remotely in a way that is similar to the way a Heating system is controlled.

An electric vehicle 134 may be reloaded using a Vehicle Charging Device (VCD) in a garage of the building 100. The VCD may be controlled locally using a Load Control Device 144. The load dispensed by the VCD may also be controlled remotely using an application.

A Smart Lighting System (SLS, 135) may be also installed in the building 100. A SLS may consist of a number of smart light bulbs or of a number of smart plugs where lamps may be plugged. The smart light bulbs and smart plugs are equipped with control boards or Systems On Chip (SOC). A lighting control 145 will then allow controlling the current in the smart light bulb or plug to be switched from the OFF state to the ON state and vice versa or to be varied to reduce/increase the brightness of the light. There may be one remote control per room. In some instances, a remote control may be combined with another switch to form a two-way switch. But there may be also a plurality of lighting controls in a room or a central lighting control from where a number of rooms may be controlled. It is to be noted that equipments that are not lamps may be plugged in a smart plug, such as an electric heating equipment, an electric cooking equipment, or any other kind of electric equipment whose functioning can be commanded both in a binary manner or in a continuous manner.

Other types of systems, not displayed on the figure, may also be included in a HAN. For instance, blinders/shutters may be equipped with electric motors and controlled and actuated either locally (room by room or centrally) or remotely. TV sets may be equipped to be programmable remotely, for instance to record programs for later playback. A number of sensors may be placed inside or outside the building to monitor the temperature, the quality of ambient air, the intensity of wind, the humidity, the amount of rain, etc. The measurements of the sensors may be sent to a server of a service provider for processing, consolidation and redistribution to the service subscribers. The measurements may also be sent only to the owner or tenant of the building, partially (privacy issues) or in total.

The controllers of the various smart control applications or subsystems running in the building 100 may be centralized at a central home controller 146. From the central home controller, it may be possible to control all applications, or only some of them. In some embodiments, the central home controller may be accessible remotely. Also, the central home controller 146 may be equipped with a screen to display the different components of the subsystems, data, images or graphics gathered by sensors of the subsystems, setpoints, alarms, parameters, etc.. In some embodiments, the screen may be a tactile surface or another input device specially adapted to the user or the application.

According to the invention, some or all of the devices or equipments of the different subsystems 131, 132, 133, 134, 135 are connected to a LAN/HAN that is an RF network. Other subsystems not displayed on the figure may also be connected to the HAN. Also, the controlling devices, 143, 144, 145 of some of the subsystems, and of subsystems not displayed on the figure should be connected to the HAN.

In the context of the invention, one or more of the networks installed on a premise may be managed by an operator. The operator may be the manufacturer or the integrator of some of the devices or may be a third party. The operator may provide upgrades of the firmware modules that are installed on some of the devices. Upgrades may be provided by a server managed by the operator and connected to the devices.

There are various solutions for upgrading firmware. For example, some manufacturers provide over-the-air (OTA) firmware that are pushed to the device and installed overnight. Another example includes upgrades being provided by a smart phone using for instance a Bluetooth connection after that the smart phone has retrieved the upgrade from a server using an app.

The upgrade may be intended to provide fixes to bugs detected by the operator and/or reported by the users. They may also be intended to provide additional functionalities to the device, as determined by the operator, possibly after requests from the community of users.

The functionalities of the loT devices are generally embedded in a firmware that is a low level machine language executable set of instructions. Therefore, firmware upgrades are currently provided as a full replacement of the current firmware, not as a differential update as may be the case for other types of software. When loT devices gain more functionalities that require a higher level language and lengthier codes, it will probably be necessary and possible to use differential upgrades.

Conversely, a number of embedded software are not organized in files. There, it is necessary to replace the whole software instead of only replacing a part of it related to network management.

The upgrades have to be tested by the operator before being sent to the users' devices on a network connection. But these tests cannot provide certainty that they will be compatible with all device configurations. These configurations may have different hardware or software configurations, some of which are not compatible with the software upgrade.

When the lack of compatibility does not affect the connectivity to the network, an easy fix of the problem is to detect the cause of the lack of compatibility and to retransmit a new upgrade.

Such an easy fix cannot be implemented when the connectivity to the network is affected.

It is in such a context that the invention provides a solution, as explained further down in the description.

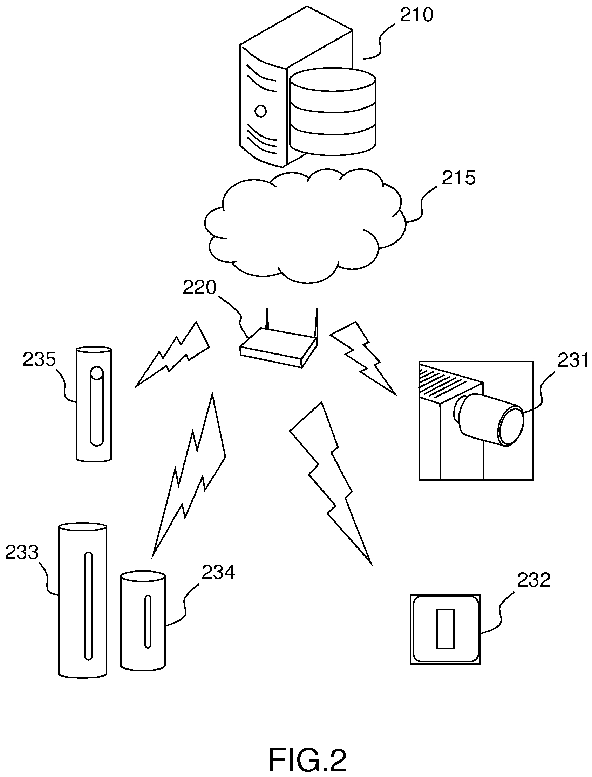

Figure 2 represents an architecture of a system configured to manage an loT network according to some embodiments of the invention.

A server 210 of the operator of the managed network of loT devices is connected to a communication network that may be wired (ADSL, optical fiber, or other) or wireless (cellular, satellite, cable, etc...).

The server may not be physically present in a definite location. The computing facilities and/or communication capabilities used by the operator may be located in the cloud, 215.

Software updates may be pushed to subscribers or pulled by the same. The updates may be periodic or made available on the spot to cope with a bug that was identified by the operator or a significant number of users.

The communication of the update to a subscriber's premises passes through a gateway, 220, installed on the premises. The gateway, 220, may be itself the general access point to the Internet or may be a secondary gateway that may be itself dedicated to the management of some or all of the loT devices installed on these premises. In the latter case, the gateway may be itself managed by one of the operators of the IoT devices network(s) and it may be connected to the main Internet gateway through a wired or a wireless connection.

A number of IoT devices may be connected to the gateway, such as a thermostat radiator valve, 231, a thermostat, 232, a weather station (indoor module, 233 and outdoor module, 234) or an indoor camera 235. Of course, other devices may be connected to the gateway, such as some of the ones depicted on figure 1, or others. The IoT devices may all belong to the same brand and be managed by the same operator, or they may belong to different brands and be managed by the same operator or different operators.

In some configurations, a number of relays may be necessary to ensure a suitable coverage of the subscriber' premises, especially if the premises comprise a plurality of buildings or if some of the devices are located outside the building where the gateway is itself located (as may be the case for instance for outdoor security cameras).

The devices 231, 232, 233, 235 may be all directly connected to the gateway 220. The outdoor module 234 of the weather station will normally be connected to the gateway through the indoor module 233. More generally, depending on the configuration of the premises, the localization of the gateway and of possible relays, some loT devices may be directly connected to the gateway in a wired mode using for instance an Ethernet protocol. In some instances, the connection may use a Power Line Carrier (PCL). On private property that has not been equipped with Ethernet cabling, it is common that the loT devices are connected wirelessly, using a Wi-Fi, a Bluetooth, a Zigbee or proprietary protocol. In some cases, the devices may themselves form a Local Area Network (LAN). The LAN may be configured in a master-slave architecture or it may configured in a mesh network architecture that extends itself as some devices are attached thereto, this variant not being depicted on the figure.

In a first variant of the invention where the operator has a specific gateway 220 installed on the premises of the subscriber, this gateway may be used as an intermediary server of the software updates of all devices installed on the subscriber's premises.

In a second variant of the invention where the operator uses a general gateway of the premises, in case there is a plurality of loT devices installed on these premises, one of these may be used as a master node of the LAN of loT devices and as the intermediary server of the software updates, the other loT devices being then slaves that can get their updates only if and when the update has been demonstrated to work on the master node.

In a third variant of the invention, all loT devices will operate in the same manner and the software updates will be installed in the same way.

These variants will convert in different architectures or flow charts that will be commented upon further down in the description. Different operators may elect different variants depending on a technical and/or cost benefit analyzis.

As a variant not depicted on the figure, the upgrade may be transmitted to the loT device by a smart phone that has retrieved the upgrade using an app.

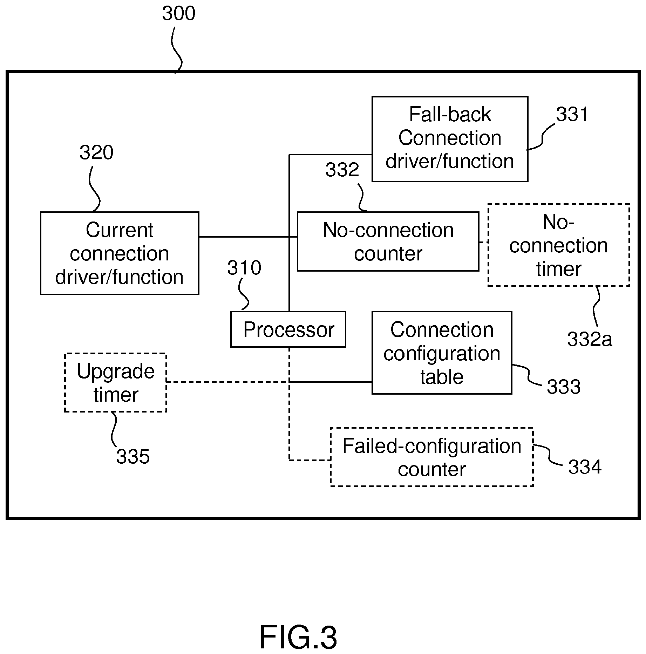

Figure 3 represents a functional architecture of a network communication logic according to some embodiments of the invention.

The invention will be implemented in a "Network Communication Logic" (NCL, 300), that will generally be part of the firmware installed on an loT device. The NCL may comprise a set of memory circuits connected to the processor 310 that manages the communications of the loT device. The processor 310 may also be a general purpose processor that manages some other functions of the loT device. The NCL may be implemented in whole or in part in an ASIC or in an FPGA.

The NCL, 300, will normally comprise:
- a Current connection driver, 320, that comprises the lines of code that are active at a moment in time to manage the connection of the loT device to the network; this driver will be specific to the type of connection; for example, a "fw.bin" file will be used for a Wi-Fi connection and uploaded from the driver part of the NCL to the Wi-Fi chipset; some files will be necessary to send commands from the OS to the connection chipset ("wpa-supplicant" and "hostapd" in the case of a Linux OS to manage Wi-Fi connections);
- a Fall-Back connection driver, 331, that is a copy of a previous operative version of the Connection driver that was workable before the last update; it may be the actual last version when no defect was detected in it, or it may be a still previous version, when the last version was found to be defective; when the Current connection driver, 320, has been determined to be defective, according to the invention, it is replaced by the Fall-back connection driver, 331, as the connection driver to be used by the device (i.e. being then a "fall-back" version); when an loT device has more than one connection (i.e. Ethernet; 4G/5G; Wi-Fi; Bluetooth; Zigbee, etc...); in some variants, it is possible to keep more than one previous version and to fall back on one of these that is marked as being more reliable than others, and possibly than the last one; in some instances, the fall back version may be decided based on a confidence index that depends on environment of the loT device and its hardware and software configuration; generally, the Fall-back connection driver, 331, will be downloaded with the firmware upgrade; if a partial/differential upgrade procedure is used, it is possible that the previous Fall-back connection driver, 331, be kept;
- a No-connection counter, 332, the loT device normally "regularly" (see below) polls the network to establish a connection, first to the gateway (if it is not directly connected to the Internet) and then to a default server (the operator's server for instance) on the Internet through the gateway, or directly to the Internet if it has a direct connection; the No-Connection counter, 332, is an internal counter to track the time elapsed and/or the number of tries since the last successful try over a period of time; the counter may be increased by one unit when the try is a failure and reduced to zero when the try is a success;
- in some instances, the No-connection counter, 332, may be then combined with a No-Connection timer, 332a, that counts the time elapsed since the last successful try; the frequency of connection tries (and therefore the time elapsed before a diagnosis may be made on the connectivity status of the device) depends on the type of device:
   ∘ some devices of a first type need to be connected continuously, or almost continuously, because they need to trigger a specific action immediately after occurrence of an event; this is typically the case of security cameras that needs to be able to send an alarm and/or images to a remote location at any moment in time; the camera will then monitor its own connectivity very frequently, for instance every minute;
   ∘ some devices of a second type need to be connected regularly; this is typically the case of weather stations the sensors of which measure their respective physical data (temperature, wind, noise, CO₂ concentration, etc...) and that transmit the new measurements to a server; measurement/transmission may for instance be performed every 30 minutes;
   ∘ some devices of a third type need to be connected only infrequently, because they capture infrequent events the immediate reporting of which to a server is not critical; this is typically the case of an activity monitoring device that will only need to connect to a server once a day.

Criteria used to determine the success or failure of a test may be:
- successful loading of the firmware data to the network chip, to indicate compatibility between the current version and the device hardware;
- successful communication between the central processor and the network chip, and activation of the network hardware;
- depending on the chosen network specification, low-level negotiation, by the device to join the network provided by the gateway or other peer-to-peer devices, to indicate compatibility between the current version and the environment where the device is installed;
- communication between the device and other devices or well known servers maintained by the operator, to indicate a working network stack;
- valid data received by the device from external servers, to indicate the absence of data corruption.

Since energy saving is a constant concern for loT devices, the number of tries over a period of time should be kept minimal; as explained below, it may be advantageous to concentrate the tries on a limited period of time after an update; this may have the drawback of not testing the updated version in a sufficient number of use cases to check that there is no regression; a compromise may be to have a frequency of trials that is decaying over time after an update.

In some cases, a history of previous connections attempts may be used to determine, before upgrading the firmware, the probability to detect success or failure. For example, if previous network connections were 100% successful, the probability to detect success or failure would be very high. But in any case, the possibility of connection that does not work at all should be taken in consideration: it may be better to accept to perform useless tests than to have a device that is no longer operative, with the subsequent need to implement a hardware recall procedure.

Some devices do not need to check their connection for the only purpose of checking their connectivity, but naturally perform network access as part of their operation (for example, a sensor taking a measurement every 30 minutes will activate its network for a brief moment only to upload its measure.) In this case, the No-Connection counter can exploit this mode of operation to update only on those occurrences; this will not change the energy consumption of the device, and only potentially make the detection of defect slower depending on the natural frequency of network access.

Optionally, the NCL, 300, may also comprise an Upgrade timer, 335; this counter may record the time of the last upgrade of the connection driver; it may be used by the NCL to adjust the threshold values of the counters 332 and 334 to optimize the connection trials and thus minimize the false positives, the false negatives and the energy consumption. For instance, at a date close to the time of update, a number of missed connections lower than at a later date may be used to trigger the replacement of the Current connection driver by the Fall-Back connection driver.

The NCL should have access to a Connection configuration table, 333; this table stores the network parameters (in case of a Wi-Fi network: network name; user password; static IP address/Dynamic Host Configuration Protocol; choice of Domain Name Server; in case of a Zigbee network: Personal Area Network ID; network key); when the connection driver is updated or restored, will access the Connection configuration table to be able to establish a connection. When the upgrade involves a change of security protocol (for instance going from WPA2 - Wi-Fi Protected Access 2 - plus TKIP - Temporal Key Integrity Protocol) to WPA2 plus AES - Advanced Encryption Standard, it may be necessary to retrieve specific information that needs to be added to the Connection configuration table, for instance the SSID - Service Set ID, either from another table or through a user input.

The Connection configuration table is accessible by the user, either locally or remotely. In this case, the connection should be capable of working as an access point. It may then be necessary to test the connection in this mode.

To this effect, optionally, a Failed-configuration counter, 334, may be provisioned in the NCL, 300; like for the No-connection counter, 332, the Failed-configuration counter may be embedded in the NCL, 300, as an internal counter to track the time elapsed and/or the number of times that the user has tried and failed to configure the loT device since the last successful try over a period of time; the counter may be increased by one unit when the try is a failure and reduced to zero when the try is a success.

Criteria used to determine the success or failure of a test can be:
- successful loading of the firmware data to the network chip, to indicate compatibility between the current version and the device hardware;
- successful communication between the central processor and the network chip, and activation of the network hardware;
- successful connection to or from a secondary device used to perform the configuration:
   ∘ for example a smart phone connecting using a Bluetooth connection to the device, where the end-user will enter the new configuration in a dedicated application that will transmit the configuration via Bluetooth;
   ∘ instead of Bluetooth, the device may act as a Wi-Fi Access Point and wait for a Wi-Fi client to connect and transmit the new configurations parameters;
   ∘ an absence of any connection from a secondary configuration device within a predefined time limit, for example 15 minutes, may be interpreted as a possible defect of the network interface used for this configuration, and counted as "+1" in the counter.
- once a new configuration has been received from the previous step, it must be applied; this may require to first reprogram the network hardware to a different mode (Wi-Fi client instead of Wi-Fi access point), where a failure must again be detected;
- once the new configuration is applied, the network connectivity can be tested according to the same logic as explained above.

Generally, when there is a plurality of devices on a network, some elements of the configuration table may apply to all the devices, while some other may apply to some of them only. In this case, the Connection configuration table, 333 and the Failed-configuration counter, 334, may be factorized in one of the devices that may play the role of a master node (whether it is a gateway or not).

In a variant of the invention, the firmware to be updated is a set of lines of codes that are not organized in files and that cannot manage files. In this case, the software upgrade cannot include connection drivers in a file format. In lieu of two different files (Current connection driver, 320, and Fall-back connection driver, 331) the "drivers" will be two sets of functions, the set of current connection functions, 320, being called by the NCL when the connection is determined to be OK and the set of Fall-back function, 331, being called by the NCL when the connection is determined to be KO. The status of the connection/configuration is for instance recorded in a connection OK/connection KO flag. The status of the flag then triggers the adequate function call.

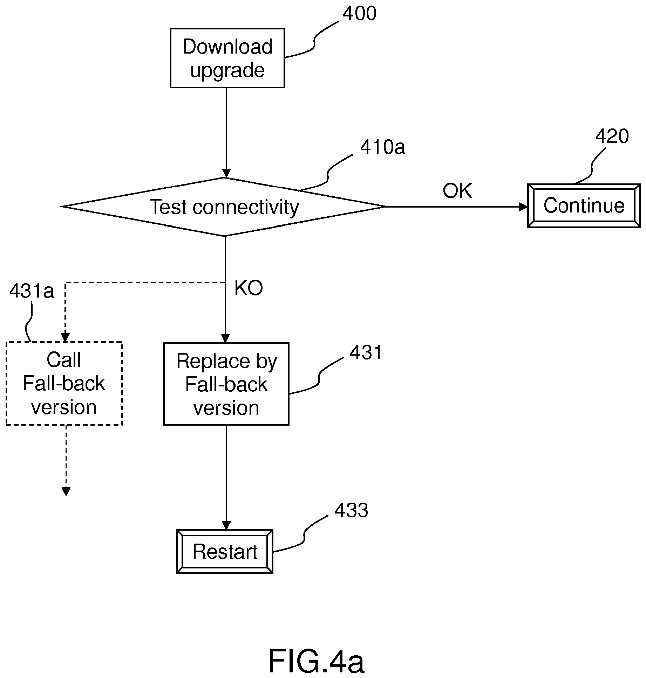

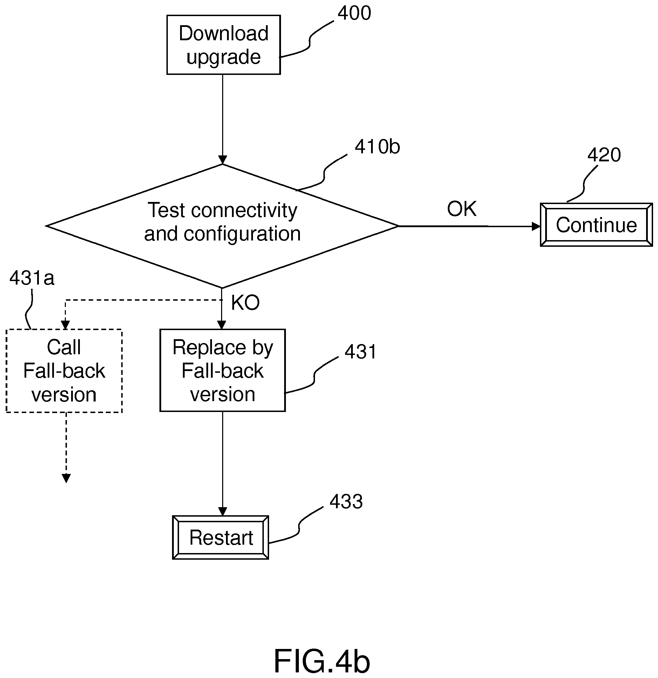

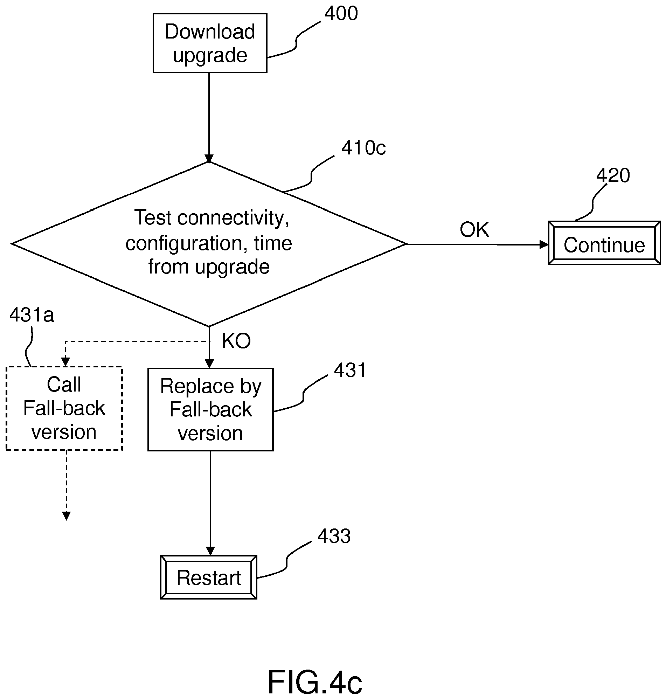

Figures 4a, 4b and 4c are variants of a flow chart of a method to implement the invention according to some of its embodiments.

The structure of the flow chart is the same on the three figures:
- at a step 400, the software upgrade is downloaded on the device (or on an intermediary server), at the operator's initiative or at the subscriber's initiative; existing configuration parameters are not modified by a software upgrade, i.e. the Connection configuration table, 333, must not be empty;
- at a step 410a, 410b, 410c, the connectivity of the device to the network is tested; the definite test that is performed will depend on the type of connection that needs to be tested; various options are possible that will be discussed further down in the description;
- if the connectivity is tested as OK, operation of the device continues, 420, as before the download;
- if the connectivity is tested as KO, the NCL is caused to replace, 431, the Current connection driver, 320, by the Previous connection driver, 331; as an option, after performance of this replacement, the connectivity test is deactivated until the next upgrade download (step not shown on the figure);
- at a step 433, a restart of the device is performed; the network interface is reactivated using the replaced driver, either by a dedicated action limited to this function, or a full reboot of the device.

The flow chart of figure 4a is a default variant of the invention where only a test of connectivity, 410a, is performed.

What is tested is a standard mode of operation of the device, i.e. the device operates as a client of a connection access point (that may be a gateway 220). The test consists in automatically determining whether the Current connection driver, 320, works correctly. This is achieved as an auto-test connection, first to the gateway, and then to the Internet. The auto-test may be performed periodically, for instance every hour, every two-hour, every four-hour, or any value that makes sense based on the history of regression that may have been recorded on this connection driver: the higher the frequency of regression, the higher the frequency of test that is needed to finally decide that there is no regression. Each time a test is positive (Connection OK), the No-connection counter is reset to zero; each time a test is negative (Connection KO), the counter is increased by one. A time elapsed since beginning of testing must be selected. If the value of the counter is zero when the time has elapsed, the connection is determined as OK; if the value of the counter is strictly positive when the time has elapsed, the connection is determined as KO. Considering the use cases, in particular whether the gateway is deactivated for a long period of time each day, for instance at night, the value of the time elapsed to determine the status of the connection may be set at 24 hours. Other values may be used. The correct value may be set after trials and errors performed in the operator or the manufacturer factory, or calculated during operation and adjusted therefrom by a patch transmitted to the device by the operator.

As an option, the connection may be declared KO also if the counter exceeds a threshold value, for instance three, meaning that three successive auto-tests have failed.

A report of the failure to connect may be logged and transmitted to the network operator to be taken into account for later upgrades. Such report will be used to improve the Current Connection Driver in the next upgrade.

The flow chart of figure 4b is another variant of the invention where a combination of a test of connectivity and of a test of configuration, 410b, is performed.

The connectivity test has already been explained above in relation to figure 4a.

Optionally, according to some embodiments of the invention, a configuration test is deemed to check that the loT device is capable of receiving a new configuration entered by a user. A failure to accept a new configuration may come from causes not detected by the standard connectivity tests described hereinabove; for example, the device may need to activate, in configuration mode, a different network driver, such as using Bluetooth to receive commands used to configure the Wi-Fi connection; or temporarily act as a Wi-Fi access point instead of a Wi-Fi client, or operate in peer-to-peer Wi-Fi.

. The test uses the Failed-configuration counter, 334, of the NCL. If the configuration parameters are present (i.e. if no factory reset procedure has been performed and if the configuration parameters have been restored), the test may be validly carried out. If the input (automatic by copy of the Connection configuration table, 333, or manual, by input - local or remote, for example, by a smart phone) fails (Configuration = KO), the Failed-configuration counter, 334, is increased by one. If the configuration succeeds (Configuration = OK), the Failed-configuration counter, 334, is reset to zero. A threshold is defined. This threshold should not be trivially low (1 or 2), so that normal fails due for example to a user error, do not create false positives. The threshold should not be too high, to make sure that there are not too many tries, so that the user does not lose too much time. The value may, by way of example, be set at a value of 3. Other values may be used. The correct value may be set after trials and errors performed in the operator or the manufacturer factory, or calculated during operation and adjusted therefrom by a patch transmitted to the device by the operator.

When one of the tests in the combination of tests (connectivity test and configuration test) is negative (Connectivity test = KO or configuration test = KO), the step 431 of replacing the Current connection driver, 320, by one of the Previous connection drivers, 331, is automatically triggered.

A report of the failure to connect or configure may be logged and transmitted to the network operator to be taken into account for later upgrades. Such report will be used to improve the Current Connection Driver in the next upgrade.

The flow chart of figure 4c is another variant of the invention where a combination of a test of connectivity, a test of configuration, a test of the Upgrade timer, 335, is performed, 410c.

The connectivity test has already been explained above in relation to figure 4a, and the test of the configuration has already been explained above in relation to figure 4b.

To minimize false positives of failed tests, it is optionally possible, according to some embodiments of the invention, to perform an additional measurement of the time elapsed since the last software update.

Such additional measurement is performed in the Upgrade timer, 335. It stores the time of download of the last upgrade. The timer then counts the time elapsed since the time of download. One or more thresholds may be set to determine the frequency of connection/configuration tries (different thresholds and frequencies may be set for the connection and for the configuration tries). A first threshold may be set, for instance, at 30 min after the download. Other values may be used. The correct value may be set after trials and errors performed in the operator or the manufacturer factory, or calculated during operation and adjusted therefrom by a patch transmitted to the device by the operator. The frequency of tests may be set at different values based on experience, the corresponding parameter being transmitted by a patch to the device.

The other tests are then performed as explained above, with the same procedure applied as a consequence of the status (OK or KO of Connectivity or Configuration).

A report of the failure to connect or configure may be logged and transmitted to the network operator to be taken into account for later upgrades, taking into account the Upgrade timer value and the frequencies of tests. Such report will be used to improve the Current Connection Driver in the next upgrade.

In all tests (410a, 410b or 410c), a parameter may be set to determine that a minimum number of successful connections/configurations has the result that the connection/configuration is considered OK. This threshold may be set at a value of one. Other values may be used. The correct value may be set after trials and errors performed in the operator or the manufacturer factory, or calculated during operation and adjusted therefrom by a next upgrade transmitted to the device by the operator.

In some variants of the invention where the firmware to be upgraded does not comprise a file management system, instead of replacing the current connection "driver", 320, by a Fall-back connection "driver", 331, the NCL includes a conditional call function, that will call the Fall-back version if the connectivity/configuration are KO. This variant replaces the steps 431 and 433 on figures 4a, 4b and 4c by a single step, 431a, "Call Fall-back version".

In some variants of the invention, "replacing" the ex-current version of the connection driver, 320, by the Fall-back version, 331, implies erasing the ex-current version from the memory of the NCL, 300. This is advantageous especially if the ex-current version had security weaknesses.

The scope of said invention is defined by the appended claims.

## Claims

1. A network communication logic (300) comprising:
- a current version (320) of a connection driver;
- an access to a memory storing a previous version of the connection driver (331);
wherein the network communication logic is configured to:
- automatically provide (410a, 410b, 410c) a determination that the current version of the connection driver is not operative to connect a device to the network;
- pursuant to said determination, automatically trigger (431) a replacement of the current version of the connection driver (320) by the previous version of the connection driver (331) and restart (433) the connection of the device wherein automatically provide a determination that the current version of the connection driver is not operative to connect a device to the network comprises changing a flag of choice of the connection driver from the current version to the previous version, and automatically triggering an access to the previous version of the connection driver comprises, on the flag being in a previous version state, triggering a call on the previous version (331) of the connection driver.

2. The network communication logic of claim 1, wherein automatically trigger a replacement of the current version of the connection driver (320) by the previous version of the connection driver (331) comprises erasing the current version of the connection driver (320).

3. The network communication logic of one of claims 1 to 2, further comprising an access to a current version of configuration parameters and an input of these configuration parameters to the connection driver.

4. The network communication logic of one of claims 1 to 3, wherein a connection managed by the connection driver is a wireless connection compliant with one of 2 to 5G cellular, a Wi-Fi, a Zigbee or a Bluetooth standard or a SigFox or LoRa connection.

5. The network communication logic of claims 1 to 3, wherein a connection managed by the connection driver is a wired connection.

6. The network communication logic of one of claims 1 to 5, wherein automatically provide a determination that the current version of the connection driver is not operative to connect to the network comprises a determination that a period during which trials to connect the device to the network have failed exceeds a predefined threshold.

7. The network communication logic of one of claims 1 to 6, wherein automatically provide a determination that the current version of the connection driver is not operative to connect to the network comprises a determination that a number of trials to connect the device to the network that have failed exceeds a predefined threshold.

8. The network communication logic of one of claims 6 to 7, wherein automatically provide a determination that the current version of the connection driver is not operative to connect to the network further comprises a determination that the current version of the connection driver has been installed within a predefined threshold of time.

9. The network communication logic of one of claims 1 to 8, wherein automatically provide a determination that the current version of the connection driver is not operative to connect to the network further comprises a determination that a number of failures to configure the device with the configuration parameters exceeds a predefined threshold.

10. The network communication logic of one of claims 6 to 9, wherein the predefined thresholds of time limits and/or number of trials are adjusted during operation by a patch provided by an operator of the network.

11. The network communication logic of claim 10, wherein the predefined thresholds of time limits and/or number of trials are adjusted based on connection/configuration failure reports.

12. The network communication logic of one of claims 1 to 11, wherein automatically trigger an access to the previous version of the connection driver instead of the current version of the connection driver is disabled when one or more of a predefined number of connectivity tests or configuration tests are valid.

13. The network communication logic of one of claims 1 to 12, wherein a frequency of connection tests is adjusted over time.

14. An electronic device comprising in a firmware the network communication logic of one of claims 1 to 13, the device selected in a group comprising weather stations, cameras, automatic shutters/blinders, thermostatic radiator valves, smart plugs, smart lights, smart locks.

15. A method of managing updates of a firmware of an electronic device, the method comprising:
- downloading to the electronic device through a network connection a current version of the firmware of the electronic device, the current version of the firmware comprising a current version of a connection driver in a network communication logic;
- rebooting the electronic device;
- automatically providing a determination of whether the current version of the connection driver is operative or not to connect the electronic device to the network;
- if the determination is negative:
∘ accessing a memory storing a previous version of the connection driver;
o automatically triggering a replacement of the current version of the connection driver (320) by the previous version of the connection driver (331) and restart (433) the connection of the device
wherein automatically providing a determination of whether the current version of the connection driver is operative or not to connect the electronic device to the network comprises changing a flag of choice of the connection driver from the current version to the previous version, and automatically triggering an access to the previous version of the connection driver comprises, on the flag being in a previous version state, triggering a call on the previous version of the connection driver.

## Patentansprüche

1. Netzwerkkommunikationslogik (300), umfassend:
- eine aktuelle Version (320) eines Verbindungstreibers;
- einen Zugriff auf einen Speicher, der eine vorherige Version des Verbindungstreibers (331) speichert;
wobei die Netzwerkkommunikationslogik konfiguriert ist zum:
- automatischen Bereitstellen ( 410a , 410b , 410c ) einer Bestimmung, dass die aktuelle Version des Verbindungstreibers nicht funktionsfähig ist, um ein Gerät mit dem Netzwerk zu verbinden;
- gemäß der Bestimmung, automatisches Auslösen (431) eines Ersetzens der aktuellen Version des Verbindungstreibers (320) durch die vorherige Version des Verbindungstreibers (331) und Neustart (433) der Verbindung des Geräts;
wobei das automatische Bereitstellen einer Bestimmung, dass die aktuelle Version des Verbindungstreibers nicht funktionsfähig ist, um ein Gerät mit dem Netzwerk zu verbinden, das Ändern eines Auswahl-Flags des Verbindungstreibers von der aktuellen Version auf die vorherige Version und das automatische Auslösen eines Zugriffs auf die vorherige Version des Verbindungstreibers, auf dem Flag in einem vorherigen Versionszustand, das Auslösen eines Aufrufs in der vorherigen Version (331) des Verbindungstreibers umfasst.

2. Netzwerkkommunikationslogik nach Anspruch 1, wobei das automatische Auslösen eines Ersetzens der aktuellen Version des Verbindungstreibers (320) durch die vorherige Version des Verbindungstreibers (331) das Löschen der aktuellen Version des Verbindungstreibers (320) umfasst.

3. Netzwerkkommunikationslogik nach einem der Ansprüche 1 bis 2, ferner umfassend einen Zugriff auf eine aktuelle Version von Konfigurationsparametern und auf eine Eingabe dieser Konfigurationsparameter in den Verbindungstreiber.

4. Netzwerkkommunikationslogik nach einem der Ansprüche 1 bis 3, wobei eine vom Verbindungstreiber verwaltete Verbindung eine drahtlose Verbindung ist, die mit einem der 2- bis 5G-Mobilfunk-, Wi-Fi-, Zigbee- oder Bluetooth-Standards oder einer SigFox- oder LoRa-Verbindung kompatibel ist.

5. Netzwerkkommunikationslogik nach Anspruch 1 bis 3, wobei eine vom Verbindungstreiber verwaltete Verbindung eine drahtgebundene Verbindung ist.

6. Netzwerkkommunikationslogik nach einem der Ansprüche 1 bis 5, wobei das automatische Bereitstellen einer Bestimmung, dass die aktuelle Version des Verbindungstreibers nicht funktionsfähig ist, um sich mit dem Netzwerk zu verbinden, eine Bestimmung umfasst, dass ein Zeitraum, während dem Versuche zum Verbinden des Geräts mit dem Netzwerk fehlgeschlagen sind, einen vordefinierten Schwellenwert überschreitet.

7. Netzwerkkommunikationslogik nach einem der Ansprüche 1 bis 6, wobei das automatische Bereitstellen einer Bestimmung, dass die aktuelle Version des Verbindungstreibers nicht funktionsfähig ist, um eine Verbindung mit dem Netzwerk herzustellen, eine Bestimmung umfasst, dass eine Anzahl von gescheiterten Versuchen, das Gerät mit dem Netzwerk zu verbinden, einen vordefinierten Schwellenwert überschreitet.

8. Netzwerkkommunikationslogik nach einem der Ansprüche 6 bis 7, wobei das automatische Bereitstellen einer Bestimmung, dass die aktuelle Version des Verbindungstreibers nicht funktionsfähig ist, um sich mit dem Netzwerk zu verbinden, ferner eine Bestimmung umfasst, dass die aktuelle Version des Verbindungstreibers innerhalb einer vordefinierten Zeitschwelle installiert wurde.

9. Netzwerkkommunikationslogik nach einem der Ansprüche 1 bis 8, wobei das automatische Bereitstellen einer Bestimmung, dass die aktuelle Version des Verbindungstreibers nicht funktionsfähig ist, um sich mit dem Netzwerk zu verbinden, ferner eine Bestimmung umfasst, dass eine Anzahl von gescheiterten Versuchen zum Konfigurieren des Geräts mit den Konfigurationsparametern einen vordefinierten Schwellenwert überschreitet.

10. Netzwerkkommunikationslogik nach einem der Ansprüche 6 bis 9, wobei die vordefinierten Schwellenwerte von Zeitlimits und/oder der Anzahl von Versuchen während des Betriebs durch einen Patch angepasst werden, der von einem Betreiber des Netzwerks bereitgestellt wird.

11. Netzwerkkommunikationslogik nach Anspruch 10, wobei die vordefinierten Schwellenwerte von Zeitlimits und/oder der Anzahl von Versuchen basierend auf Verbindungs-/Konfigurationsfehlerberichten angepasst werden.

12. Netzwerkkommunikationslogik nach einem der Ansprüche 1 bis 11, wobei das automatische Auslösen eines Zugriffs auf die vorherige Version des Verbindungstreibers anstelle der aktuellen Version des Verbindungstreibers deaktiviert wird, wenn ein oder mehrere einer vordefinierten Anzahl von Verbindungstests oder Konfigurationstests gültig sind.

13. Netzwerkkommunikationslogik nach einem der Ansprüche 1 bis 12, wobei eine Häufigkeit von Verbindungstests über die Zeit angepasst wird.

14. Elektronische Vorrichtung, welche in einer Firmware die Netzwerkkommunikationslogik nach einem der Ansprüche 1 bis 13 umfasst, wobei die Vorrichtung aus einer Gruppe ausgewählt ist, die Wetterstationen, Kameras, automatische Rollläden/Jalousien, Heizkörperthermostatventile, Smart Plugs, Smart Lights, Smart Locks umfasst.

15. Verfahren zum Verwalten von Aktualisierungen einer Firmware einer elektronischen Vorrichtung, umfassend:
- Herunterladen einer aktuellen Version der Firmware der elektronischen Vorrichtung auf die elektronische Vorrichtung, über eine Netzwerkverbindung, wobei die aktuelle Version der Firmware eine aktuelle Version eines Verbindungstreibers in einer Netzwerkkommunikationslogik umfasst;
- Neustart der elektronischen Vorrichtung;
- automatisches Bereitstellen einer Feststellung, ob die aktuelle Version des Verbindungstreibers betriebsfähig ist oder nicht, um die elektronische Vorrichtung mit dem Netzwerk zu verbinden;
- bei negativer Feststellung:
o Zugreifen auf einen Speicher, der eine vorhergehende Version des Verbindungstreibers speichert;
o automatisches Auslösen eines Ersetzens der aktuellen Version des Verbindungstreibers (320) durch die vorherige Version des Verbindungstreibers (331) und Neustart (433) der Verbindung der Vorrichtung;
wobei das automatische Bereitstellen einer Bestimmung, ob die aktuelle Version des Verbindungstreibers betriebsfähig ist oder nicht, um die elektronische Vorrichtung mit dem Netzwerk zu verbinden, das Ändern eines Auswahl-Flags des Verbindungstreibers von der aktuellen Version auf die vorherige Version und das automatische Auslösen eines Zugriffs auf die vorherige Version des Verbindungstreibers, wenn sich das Flag in einem früheren Versionszustand befindet, das Auslösen eines Aufrufs an der früheren Version des Verbindungstreibers umfasst.

## Revendications

1. Logique de communication réseau (300) comprenant:
- une version actuelle (320) d'un pilote de connexion;
- un accès à une mémoire stockant une version précédente (331) du pilote de connexion;
dans laquelle la logique de communication réseau est configurée pour:
- fournir automatiquement (410a, 410b, 410c) une détermination que la version actuelle du pilote de connexion ne fonctionne pas pour connecter un périphérique au réseau;
- conformément à ladite détermination, déclencher automatiquement (431) un remplacement de la version actuelle (320) du pilote de connexion par la version précédente (331) du pilote de connexion et redémarrer (433) la connexion du périphérique ;
dans laquelle la fourniture automatique d'une détermination que la version actuelle du pilote de connexion n'est pas opérationnelle pour connecter un dispositif au réseau comprend le changement d'un drapeau de choix du pilote de connexion de la version actuelle à la version précédente, et le déclenchement automatique d'un accès à la version précédente du pilote de connexion comprend, sur le drapeau étant dans un état de version précédente, le déclenchement d'un appel dans la version précédente (331) du pilote de connexion.

2. Logique de communication réseau selon la revendication 1, dans laquelle le déclenchement automatique d'un remplacement de la version actuelle (320) du pilote de connexion par la version précédente (331) du pilote de connexion comprend l'effacement de la version actuelle (320) du pilote de connexion.

3. Logique de communication réseau selon l'une des revendications 1 à 2, comprenant en outre un accès à une version courante de paramètres de configuration et à une entrée de ces paramètres de configuration dans le pilote de connexion.

4. Logique de communication réseau selon l'une des revendications 1 à 3, dans laquelle une connexion gérée par le pilote de connexion est une connexion sans fil conforme à l'une parmi la norme de téléphonie mobile 2 à 5G, la norme Wi-Fi, Zigbee ou Bluetooth ou une connexion SigFox ou LoRa.

5. Logique de communication réseau selon les revendications 1 à 3, dans laquelle une connexion gérée par le pilote de connexion est une connexion câblée.

6. Logique de communication réseau selon l'une des revendications 1 à 5, dans laquelle la fourniture automatique d'une détermination que la version actuelle du pilote de connexion n'est pas opérationnelle pour se connecter au réseau comprend une détermination qu'une période pendant laquelle les essais de connexion du périphérique au réseau ont échoué dépasse un seuil prédéfini.

7. Logique de communication réseau selon l'une des revendications 1 à 6, dans laquelle la fourniture automatique d'une détermination que la version actuelle du pilote de connexion n'est pas opérationnelle pour se connecter au réseau comprend une détermination qu'un certain nombre d'essais pour connecter le périphérique au réseau qui ont échoué dépasse un seuil prédéfini.

8. Logique de communication réseau selon l'une des revendications 6 à 7, dans laquelle la fourniture automatique d'une détermination que la version actuelle du pilote de connexion n'est pas opérationnelle pour se connecter au réseau comprend en outre une détermination que la version actuelle du pilote de connexion a été installée dans un délai prédéfini.

9. Logique de communication réseau selon l'une des revendications 1 à 8, dans laquelle la fourniture automatique d'une détermination que la version actuelle du pilote de connexion n'est pas opérationnelle pour se connecter au réseau comprend en outre une détermination qu'un certain nombre d'échecs pour configurer le périphérique avec les paramètres de configuration dépasse un seuil prédéfini.

10. Logique de communication réseau selon l'une des revendications 6 à 9, dans laquelle les seuils prédéfinis des limites de temps et/ou du nombre d'essais sont ajustés pendant le fonctionnement par un correctif fourni par un opérateur du réseau.

11. Logique de communication réseau selon la revendication 10, dans laquelle les seuils prédéfinis des limites de temps et/ou du nombre d'essais sont ajustés sur la base des rapports d'échec de connexion/configuration.

12. Logique de communication réseau selon l'une des revendications 1 à 11, dans laquelle déclencher automatiquement un accès à la version précédente du pilote de connexion au lieu de la version actuelle du pilote de connexion est désactivé lorsqu'un ou plus d'un nombre prédéfini de tests de connectivité ou de configuration sont valides.

13. Logique de communication réseau selon l'une des revendications 1 à 12, dans laquelle une fréquence des tests de connexion est ajustée au fil du temps.

14. Dispositif électronique comprenant dans un micrologiciel la logique de communication réseau selon l'une des revendications 1 à 13, le dispositif sélectionné dans un groupe comprenant des stations météorologiques, des caméras, des volets/stores automatiques, des vannes de radiateur thermostatiques, des prises intelligentes, des phares intelligents, des serrures intelligentes.

15. Procédé de gestion de mises à jour d'un micrologiciel d'un dispositif électronique, la méthode comprenant:
- le téléchargement vers le dispositif électronique par le biais d'une connexion de réseau d'une version actuelle du micrologiciel du dispositif électronique, de la version actuelle du micrologiciel comprenant une version actuelle d'un pilote de connexion dans une logique de communication réseau;
- le redémarrage du dispositif électronique;
- la fourniture automatique d'une détermination si la version actuelle du pilote de connexion est opérationnelle ou non pour connecter le dispositif électronique au réseau;
- si la détermination est négative:
∘ l'accès à une mémoire stockant une version précédente du pilote de connexion;
∘ le déclenchement automatique d'un remplacement de la version actuelle du pilote de connexion (320) par la version précédente du pilote de connexion (331) et redémarrage (433) de la connexion du périphérique ;
dans laquelle la fourniture automatique d'une détermination si la version actuelle du pilote de connexion est opérationnelle ou non pour connecter le dispositif électronique au réseau comprend la modification d'un drapeau de choix du pilote de connexion de la version actuelle à la version précédente, et le déclenchement automatique d'un accès à la version précédente du pilote de connexion comprend, lorsque le drapeau est dans un état de version précédente, le déclenchement d'un appel sur la version précédente du pilote de connexion.
